# EUROPÄISCHE PATENTANMELDUNG

(11) **EP 0 911 664 A2**
(43) Veröffentlichungstag der Anmeldung: **28.04.1999**
(21) Anmeldenummer: 98117972.4
(22) Anmeldetag: 22.09.1998
(51) Int. Cl.: G02B 7/28, G02B 21/00

(54) **Optische Bildaufnahmeeinrichtung und Verfahren zu deren Nutzung**

(30) Priorität: 22.10.1997 DE 19746575
(71) Anmelder: Carl Zeiss, 89518 Heidenheim (Brenz) (DE); CARL-ZEISS-STIFTUNG, trading as CARL ZEISS, 89518 Heidenheim (DE)
(72) Erfinder: Meier, Hans-Jürgen, 73431 Aalen (DE)

(57) **Zusammenfassung**

Die Erfindung betrifft eine optische Bildaufnahmeeinrichtung eines dreidimensionalen Objekts, bei welcher ein Beleuchtungsrastergenerator in einer ersten Fokalebene eine Vielzahl von getrennten Leuchtflecken gleichzeitig erzeugt, die Leuchtflecken in der ersten Fokalebene durch optische Elemente in eine zweite Fokalebene auf dem dreidimensionalen Objekt abgebildet werden und das Bild der Leuchtflecken durch optische Elemente auf ein erste Detektorvorrichtung mit mehreren Detektorelementen abgebildet wird.

Erfindungsgemäß ist eine Verstelleinrichtung im Strahlengang des Beleuchtungsrastergenerators angeordnet, welche eine zumindest zweiachsige Lageveränderung der ersten Fokalebene bewirken kann.

Das erfindungsgemäße Verfahren dient zur Ermittlung der scharf abgebildeten Bereiche in einer optische Bildaufnahmeeinrichtung von einem dreidimensionalen Objekt, bei welcher in der Bildaufnahmeeinrichtung ein Beleuchtungsrastergenerator in einer ersten Fokalebene eine Vielzahl von getrennten Leuchtflecken gleichzeitig erzeugt, die Leuchtflecken in der ersten Fokalebene durch optische Elemente in eine zweite Fokalebene auf dem dreidimensionalen Objekt abgebildet werden und das Bild der Leuchtflecken durch optische Elemente auf ein erste Detektorvorrichtung mit mehreren Detektorelementen abgebildet wird sowie das Bild des Objekts durch eine zweite Detektorvorrichtung aufgenommen wird.

Erfindungsgemäß erfolgt eine Korrelation der Bilder der beiden Detektorvorrichtungen.

## Beschreibung

Die Erfindung betrifft eine optische Bildaufnahmeeinrichtung eines dreidimensionalen Objekts, bei welcher ein Beleuchtungsrastergenerator in einer ersten Fokalebene eine Vielzahl von getrennten Leuchtflecken gleichzeitig erzeugt, die Leuchtflecken in der ersten Fokalebene durch optische Elemente in eine Zweite Fokalebene auf dem dreidimensionalen Objekt abgebildet werden und das Bild der Leuchtflecken durch optische Elemente auf ein erste Detektorvorrichtung mit mehreren Detektorelementen abgebildet wird, sowie ein Bildaufnahmeverfahren, welches vorteilhaft mit dieser optischen Bildaufnahmeeinrichtung verwendet werden kann.

Die meisten Fokussensorsysteme benutzen Effekte, bei denen die rückgestrahlte Energie in zwei unterschiedlichen Kanälen miteinander verglichen wird, um das Fokussignal zu erzeugen. Das führt zu dem Nachteil, daß Intensitätsschwankungen in einem der Kanäle fälschlicherweise einen Fokusshift vortäuschen und zu einer ungewollten Reaktion des Systems führen. Die Regelkreise in den bekannten Systemen arbeitet auch meistens rein analog und sind daher sehr störungsanfällig.

Fokussysteme können nur eine einzige Ebene wirklich scharf abbilden, wogegen die meisten betrachteten Objekte an verschiedenen Stellen des Bildfeldes auch unterschiedlich fokussiert werden müßten.

Es ist die Aufgabe der Erfindung eine optische Bildaufnahmeeinrichtung insbesondere zur Fokusdetektion zu schaffen, welche keinen Fokusshift aufweist.

Diese Aufgabe wird erfindungsgemäß durch den ersten Patentanspruchs gelöst.

Die erfindungsgemäße optische Bildaufnahmeeinrichtung eines dreidimensionalen Objekts besitzt einen Beleuchtungsrastergenerator, welcher in einer ersten Fokalebene eine Vielzahl von getrennten Leuchtflecken gleichzeitig erzeugt. Diese Leuchtflecken in der ersten Fokalebene werden durch optische Elemente in eine zweite Fokalebene auf dem dreidimensionalen Objekt abgebildet und das Bild der Leuchtflecken durch optische Elemente auf ein erste Detektorvorrichtung mit mehreren Detektorelementen abgebildet.

Erfindungsgemäß weist die optische Bildaufnahmeeinrichtung eine Verstelleinrichtung im Strahlengang des Beleuchtungsrastergenerators auf, welche eine zumindest zweiachsige Kippung (Lageveränderung) der ersten Fokalebene bewirken kann.

Vorzugsweise ist der Beleuchtungsrastergenerator aus einer zweidimensionale Anordnung mehrerer Linsen aufgebaut.

Es ist vorteilhaft, wenn das Licht der Lichtquelle des Beleuchtungsrastergenerators monochromatisches Licht ist, da dieses Licht dann leichter aus dem Strahlengang ausgekoppelt werden kann.

Vorzugsweise ist die Verstellvorrichtung am Beleuchtungsrastergenerator angebracht, wodurch nur kleine Kippwinkel realisiert werden müssen.

Die Verstellvorrichtung ist vorzugsweise aus drei Verstellelementen aufgebaut, welche auf einem Kreis mit zumindest annähernd gleichem Abstand angeordnet sind. Dies erlaubt die Einstellung jeder gewünschten Kipprichtung und deren Größe.

Da die Verstellelemente nur kurze Wege bewältigen müssen, bietet sich insbesondere der Einsatz von Piezostellern an.

Eine schnelle Auswertung erhält man, wenn die erste Detektorvorrichtung auf einer Fläche zweidimensional detektiert, so daß kein Scanvorgang durchgeführt werden muß.

Eine schnelle Datenaufnahme ist bei der Verwendung von einem CCD-Array-Sensor als erste Detektorvorrichtung sichergestellt.

Im Beleuchtungsstrahlengang sollte eine Einkopplungseinrichtung angeordnet sein, welche das Leuchtfleckenraster in den Beleuchtungsstrahlengang einkoppelt. Dadurch ermöglicht man einen kompakten Aufbau des Fokussensors.

Desgleichen sollte im Beleuchtungsstrahlengang eine Auskopplungseinrichtung angeordnet, welche das Bild des Leuchtfleckenrasters auf eine zweite Detektorvorrichtung abbildet (ausschließlich für die Fokussieranordnung verwendet).

Es ist für eine schnelle Bearbeitung der von der Detektorvorrichtungen erzeugten Signale vorteilhaft, wenn für die Auswertung der Ausgangssignale zumindest einer der beiden Detektorvorrichtungen mit einer Auswerteeinrichtung verbunden ist.

Zur Bildaufnahme sollte vorzugsweise zusätzlich eine Breitband-Beleuchtung in der Bildaufnahmeeinrichtung vorgesehen sein.

Vorzugsweise benutzen die Breitband-Beleuchtung und das Leuchtfleckenraster denselben Beleuchtungsstrahlengang, wodurch die Gerätedimensionen klein gehalten werden können.

Eine am Objektiv oder am Objekt angreifende z-Bewegungseinrichtung ermöglicht die schnelle Aufnahme von scharfen Bildern von dreidimensionalen Objekten.

Dabei sollten die Verstellelemente gleichzeitig zur Einjustierung der Linsenplatte relativ zum Objekt eine z-Bewegung ausführen können.

Besonders vorteilhaft kann die erfindungsgemäße optische Bildaufnahmeeinrichtung eingesetzt werden, wenn das Objekt ein Wafer ist, welcher zur Herstellung von Halbleiterchips benutzt wird.

Das erfindungsgemäße Verfahren zur Ermittlung der scharf abgebildeten Bereiche einer optische Bildaufnahmeeinrichtung eines dreidimensionalen Objekts verwendet in der Bildaufnahmeeinrichtung einen Beleuchtungsrastergenerator, welcher in einer ersten Fokalebene eine Vielzahl von getrennten Leuchtflecken gleichzeitig erzeugt. Diese Leuchtflecken werden in der ersten Fokalebene durch optische Elemente in eine zweite Fokalebene auf dem dreidimensionalen Objekt abgebildet und das Bild der Leuchtflecken wird durch optische Elemente auf ein erste Detektorvorrichtung mit mehreren Detektorelementen abgebildet wird sowie das Bild des Objekts durch eine zweite Detektorvorrichtung aufgenommen.

Erfindungsgemäß erfolgt eine Korrelation der Bilder der beiden Detektorvorrichtungen. Dabei kann die Bildaufnahme des Objekts und die Detektion der Fokuslage gleichzeitig erfolgen.

Vorzugsweise bestimmt das Leuchtfleckenraster die scharfen Bereiche des Bildes.

Vorzugsweise erfolgt in einer ersten Stellung 1) durch die Leuchtflecken eine Auswahl der aufzunehmenden Teilbereiche eines Bildes, dann 2) wird das Leuchtfleckenraster ausgeschaltet, worauf eine Teilbildaufnahme erfolgt und dann 3) erfolgt zumindest eine Bewegung des Objekts aus der ersten Stellung in eine andere Stellung, wobei nach jedem Stellungswechsel die Schritte 1) bis 3) wiederholt werden.

Weiterhin vorzugsweise erfolgt durch Schrägstellung der Leuchtflecken in der ersten Fokalebene eine Detektierung der Objekttiefe und nach einer Geradstellung der Leuchtflecken in der ersten Fokalebene erfolgt dann die eigentliche Bildaufnahme.

Die Erfindung wird im folgenden anhand eines Ausführungsbeispiels unter Bezugnahme auf die beiliegende Figur, näher erläutert, wobei das nachfolgende Beispiel keinen abschließenden Charakter für die Erfindung hat und weitere vorteilhafte Ausgestaltungen der Erfindung beinhaltet.

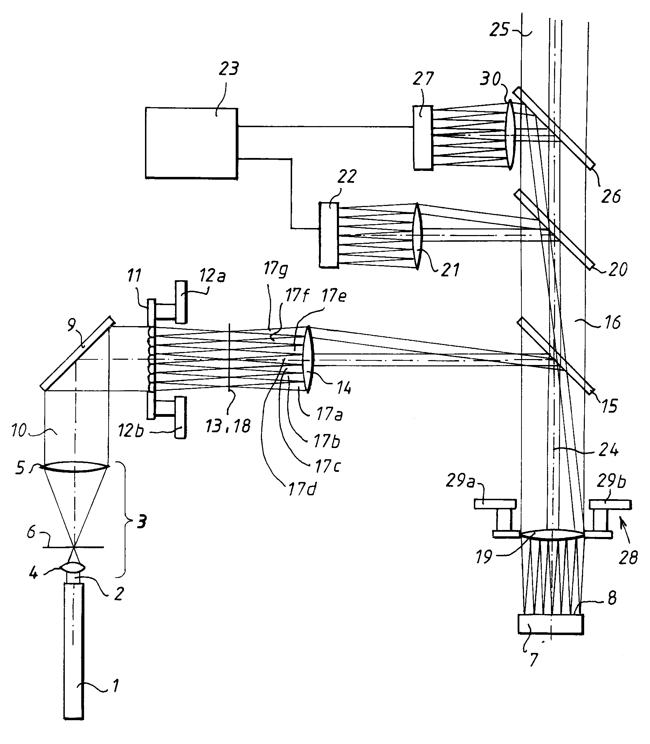

Es sind zu sehen in der einzigen Figur 1 eine schematische Darstellung der erfindungsgemäßen Einrichtung.

Die erfindungsgemäße Einrichtung dient hierbei als Fokussensor in einem Mikroskop und besteht aus einem Minimum an optischen Elementen, die so eingesetzt werden, daß der Ort einzelner Teilbilder für die Fokusmessung ausgenutzt wird und nicht unterschiedliche Intensitäten. Für das Fokussensorsystem wird dabei eine andere Wellenlänge benutzt als für die Abbildung im Mikroskop-Strahlengang.

Der in der Figur gezeigte Fokussensor besitzt somit einen Laser (1) als Lichtquelle für den Fokussensor bzw. Detektor Das parallel aus dem Laser (1) austretende Lichtbündel (2) wird mittels einer Strahlquerschnitt-Vergrößerungseinrichtung (3) (Expander), welche im dargestellten Beispiel aus zwei positiven Linsen (4, 5) besteht, zwischen welchen eine Lochblende (6) als Divergenzfilter angebracht ist, so aufgeweitet, daß die ganze gewünschte Bestrahlungsfläche (8), in diesem Fall ein Wafer (7) zur Herstellung von Halbleiterbauteilen, ausgestrahlt werden kann.

Durch einen im 45°-Winkel angeordneten Spiegel (9) (welcher aber auch für andere Varianten der Erfindung einen anderen Winkel aufweisen darf) wird dieses aufgeweitete Lichtbündel (10) dann auf ein kreisrundes Linsenarray (11) gelenkt, dessen Winkellage relativ zu dem aufgeweiteten Lichtbündel (10) durch mehrere an ihm angebrachte (mindestens zwei sich gegenüberliegende, besser drei auf dem Umfang angeordnete) Piezoversteller (12a, 12b) verstellbar ist. Die Strahlumlenkung durch den Spiegel (9) sorgt für einen kompakten Aufbau der Anlage.

Die Fokusebene (13) dieses Mikrolinsenarrays (11) wird durch ein optisches System (14, 15) so in den Beobachtungsstrahlengang (16) eines Mikroskopes eingespiegelt, daß ein Bild der Foki (13) des Arrays (11) auf das zu beobachtenden Objekt (7) abgebildet wird. Dazu teilt das Linsenarray (11) (Mikrolinsenplatte) das auf sie einfallende Strahlenbündel (17a-f) in viele voneinander unabhängige kleinere Strahlenbündel (17a-f) auf. Diese kleineren Strahlenbündel (17a-f) haben einen individuellen Fokus, welcher für alle Strahlenbündel (17a-f) in einer Ebene (13) liegt. In dieser Ebene (13) ist eine weitere Lochblendenplatte (18) angeordnet, welche für jedes der vielen Strahlenbündel (17a-f) jeweils eine Öffnung aufweist (wobei auf diese Lochblendenplatte (18) im Normalfall verzichtet werden kann). Hinter der Fokalebene (13) ist eine Linse (14) mit positiver Brechkraft angeordnet, durch welche die Strahlenbündel (17a-f) gemeinsam auf eine im Beobachtungsstrahlengang (16) befindliche erste Planplatte (15) fallen. Diese Planplatte (15) besitzt eine Beschichtung, welche einen Teil des Lichts der Strahlenbündel (17a-f) für den Fokussensor auf die Bestrahlungsfläche (8) des zu bestrahlenden Objekts (7) ablenkt.

Vor dem Objekt (7) befindet sich eine Objektiv (19) mit positiver Brechkraft, welche die Strahlenbündel (17a-f) auf die Oberfläche des Objekts (7) im Bereich der Bestrahlungsfläche (8) fokussiert. Auf der Werkstückoberfläche (8) erzeugen die Strahlenbündel (17a-f) einen Spot, dessen Größe durch die optische Auslegung der Anordnung festgelegt werden kann.

Die Oberfläche des Objekts (7) wirkt, falls richtig fokussiert ist, wie ein Spiegel, der die Foki (13) des Arrays (11) in das Objektiv (19) zurückwirft. Dabei fällt das von der Objektoberfläche (8) reflektierte Licht durch das Objektiv (19) und die erste Planplatte (15) auf eine zweite Planplatte (20), welche das Licht auf ein Objektiv (21) mit positiver Brechkraft lenkt. Diese zweite Planplatte (20) ist als dichroitischen Teilerspiegel ausgebildet und durch sie wird das Laserlicht der Foki wieder ausgekoppelt und durch das Linsensystem des Objektivs (21) auf den CCD-Detektor (22) abgebildet. Durch dieses Objektiv (21) werden somit die vielen Strahlenbündel der Spots auf die photoempfindliche Oberfläche eines CCD-Detektors (22) gelenkt. Dieser CCD-Detektor (22) ist mit einem Rechner (23) verbunden, welcher die von dem CCD-Detektor (22) empfangenen Signale auswertet und so ein Meßsignal erzeugt. Die Art und Größe dieses Meßsignals ist dann ein Maß dafür, ob sich daß Werkstück (7) in der Fokusebene des Mikroskops befindet. Wenn sich das Werkstück (7) nicht in der Fokusebene des Mikroskops befindet, wird entweder die Lage des Werkstücks (7) in der z-Achse verändert oder das optische System des Mikroskops nachjustiert.

Auf dem CCD-Array (22) erscheint somit ein Bild der Foki des Arrays, sofern das Objekt (7) fokussiert ist, andernfalls verwaschen die einzelnen Leuchtflecke.

Wird nun mit Hilfe von drei Piezostellern (12a, 12b (12c in dieser Figur nicht sichtbar)) die Mikrolinsenplatte (11) leicht verkippt, so ist auch ihre Fokusebene (13) verkippt und ihr Bild wird nur für diejenigen Leuchtpunkte scharf auf dem Objekt (7) abgebildet, für welche die Fokalposition gerade stimmt. Man sieht also im Bild auf dem CCD-Detektor (22) nur eine scharfe Bildpunktreihe, deren Position ein Maß für die Fokuslage ist. Beim Durchfokussieren wandert die scharfe Bildpunktzeile über den CCD-Detektor (22). Es ist nun Aufgabe der Software im angeschlossenen Rechner (23), aus den Positionen der Bildpunkte die Fokusposition zu berechnen und den Fokusregler anzusteuern.

Da der Kippwinkel des Mikrolinsenarrays (11) beliebig gewählt werden kann, läßt sich die Empfindlichkeit des Systems leicht an verschiedene Vergrößerungen anpassen.

Für den Fall, daß die Objektebene (8) nicht senkrecht zur optischen Achse (24) steht, ergibt die Abbildung eine Verdrehung der scharf abgebildeten Fokuspunkte relativ zur Kipprichtung der Mikrolinsenplatte (11). Aus diesem Verdrehwinkel kann die Kipprichtung und ihr Betrag errechnet werden, wobei die Kipprichtung des Mikrolinsenarrays (11) in jede beliebige Richtung gewählt werden kann. (Wenn beide, Arrayplatten (11) und Objekt (7), zueinander parallel werden, gibt es jedoch keine einzelne Fokuszeile mehr, sondern nur noch ein gleichmäßiges Feld aller Foki).

Die Vorteile des Sensors sind neben seinem digitalen Verhalten, die Fähigkeit, zusätzlich zum Fokus die Verkippung der Objektebene zu ermitteln.

Daß nun im folgenden beschriebene Verfahren löst das Problem, das Fokusdetektionssysteme nur in einer einzigen Ebene wirklich scharf abbilden und liefert ein Bild, das alle Tiefen des 3D-Objektes (7) fast gleichzeitig scharf abbilden kann. Dies ist aber notwendig, da die meisten betrachteten Objekte (7) an verschiedenen Stellen des Bildfeldes (8) auch eine unterschiedliche Höhe aufweisen und deshalb unterschiedlich fokussiert werden müssen, wenn man im gesamten Bildfeld (8) ein scharfes Bild erhalten möchte. Die normal vorhandene Tiefenschärfe der Mikroskope reicht dazu in den seltensten Fällen aus.

Zusätzlich zur Breitbandbeleuchtung (25) des Objektes (7) wird das Bild des oben beschriebenen Mikrolinsenarrays (11), welches von Laserlicht (2) beleuchtet wird, auf das Objekt (7) (Oberfläche des Wafers) abgebildet. Das Mikrolinsenarray (11) ist dabei exakt parallel zur Fokusebene des Objektivs (19) vor der Oberfläche (8) des Werkstücks (7) ausgerichtet. Das von der Oberfläche (8) des Werkstücks (7) reflektierte Laserlicht wird von der Breitbandbeleuchtung dichroitisch durch eine Planplatte (20) getrennt und auf einen CCD-Detektor (22) gelenkt.

Das Bild der Oberfläche (8) des Werkstücks (7) im Breitband-Licht (25) wird ebenfalls auf einen eigenen CCD-Detektor (27) abgebildet, wobei jedoch das Objektiv (19) eine ständige Fokusbewegung um die optimale Schärfenebene herum ausführt (Fokusdither). Dazu ist an dem Objektiv (19) vor der Oberfläche (8) des Objekts (7) eine schnelle Verstelleinrichtung (28) angebracht, welche in dem dargestellten Beispiel aus drei auf dem Umfang des Objektivs (19) gleichmäßig angeordneten Piezoverstellern (29a-c) besteht. Während der Ditherbewegung werden einzelne Bereiche des Bildes scharf, während andere unscharf werden. Dieses Verhalten gilt gleichermaßen für das Laserlicht (2) des Mikrolinsenarrays (11) wie für das Breitband-Licht (25) des Objektes (7). Vor dem CCD-Detektor (27) ist ein Objektiv (30) angeordnet, welche die Oberfläche (8) des Objekts (7) scharf auf den CCD-Detektor (27) abbildet.

Erfindungsgemäß erfolgt nun die Ausnutzung der Korrelation der Daten des Fokussensors mit den Daten des CCD-Detektors (27) für die Bildaufnahme mittels der Breitbandbeleuchtung (25) zu einer Kombination aller scharf abgebildeten Punkte während des Ditherns zu einem einzigen scharfen Bild des 3D-Objektes (7). Hierzu wird für jede einzelne Ditherposition nur die Bildinformation weitergeleitet, deren analoge Bildfeldzone durch das Laserlicht (2) als scharf abgebildet erkannt wird. Die Auswertesoftware in dem Rechner (23), welcher sowohl mit dem CCD-Detektor (27) für die Bildaufnahme als auch mit dem CCD-Detektor für die Fokusdetektion (22) verbunden ist, ist für die scharfen Bereiche im Laserlicht (2) wesentlich einfacher zu realisieren als für das Breitband-Licht (25) vom Objekt (7), da die Sollform der scharfen Bildpunkte des Linsenarrays (11) bekannt ist.

Der Vorteil des Verfahrens besteht in einer direkten Aufnahme der Breitband-Licht-Bilder gegenüber einer Auswertung vieler Breitband-Licht-Bilder, wodurch sich die Datenmenge drastisch reduziert und sich die Zeit für die Bildaufnahme drastisch reduziert.

Die in der Figur gezeigte Anordnung dient in erster Linie als Fokussensor, wobei das Mikrolinsenarray (11) leicht verkippt wird. In dieser Form kann es auch hier zum Auffinden der Dither-Nullpositon benutzt werden. Danach könnte der CCD-Detektor (22) auch für die 3D-Anwendung verwendet werden, wenn es exakt parallel zur Schärfenebene mit Hilfe der Piezosteller (11) justiert wird.

## Patentansprüche

1. Optische Bildaufnahmeeinrichtung eines dreidimensionalen Objekts, bei welcher ein Beleuchtungsrastergenerator in einer ersten Fokalebene eine Vielzahl von getrennten Leuchtflecken gleichzeitig erzeugt, die Leuchtflecken in der ersten Fokalebene durch optische Elemente in eine zweite Fokalebene auf dem dreidimensionalen Objekt abgebildet werden und das Bild der Leuchtflecken durch optische Elemente auf ein erste Detektorvorrichtung mit mehreren Detektorelementen abgebildet wird, dadurch gekennzeichnet, daß eine Verstelleinrichtung im Strahlengang des Beleuchtungsrastergenerators angeordnet ist, welche eine zumindest zweiachsige Lageveränderung der ersten Fokalebene bewirken kann.

2. Optische Bildaufnahmeeinrichtung nach Anspruch 1, dadurch gekennzeichnet, daß der Beleuchtungsrastergenerator eine zweidimensionale Anordnung mehrerer Linsen ist.

3. Optische Bildaufnahmeeinrichtung nach Anspruch 1 oder 2, dadurch gekennzeichnet, daß das Licht der Lichtquelle des Beleuchtungsrastergenerators monochromatisches Licht ist.

4. Optische Bildaufnahmeeinrichtung nach einem der Ansprüche 1-3, dadurch gekennzeichnet, daß die Verstellvorrichtung am Beleuchtungsrastergenerator angeordnet ist.

5. Optische Bildaufnahmeeinrichtung nach einem der Ansprüche 1-4, dadurch gekennzeichnet, daß die Verstellvorrichtung aus drei Verstellelementen aufgebaut ist, welche auf einem Kreis mit zumindest annähernd gleichem Abstand angeordnet sind.

6. Optische Bildaufnahmeeinrichtung nach einem der Ansprüche 1-5, dadurch gekennzeichnet, daß die Verstellelemente Piezosteller sind.

7. Optische Bildaufnahmeeinrichtung nach einem der Ansprüche 1-6, dadurch gekennzeichnet, daß die erste Detektorvorrichtung zweidimensional ist.

8. Optische Bildaufnahmeeinrichtung nach einem der Ansprüche 1-7, dadurch gekennzeichnet, daß die erste Detektorvorrichtung ein CCD-Array-Sensor ist.

9. Optische Bildaufnahmeeinrichtung nach einem der Ansprüche 1-8, dadurch gekennzeichnet, daß im Beleuchtungsstrahlengang eine Einkopplungseinrichtung angeordnet ist, welche das Leuchtfleckenraster in den Beleuchtungsstrahlengang einkoppelt.

10. Optische Bildaufnahmeeinrichtung nach einem der Ansprüche 1-9, dadurch gekennzeichnet, daß im Beleuchtungsstrahlengang eine Auskopplungseinrichtung angeordnet ist, welche das Bild des Leuchtfleckenrasters auf eine zweite Detektorvorrichtung abbildet.

11. Optische Bildaufnahmeeinrichtung nach einem der Ansprüche 1-10, dadurch gekennzeichnet, daß für die Auswertung der Ausgangssignale zumindest einer der beiden Detektorvorrichtungen diese mit einer Auswerteeinrichtung verbunden ist.

12. Optische Bildaufnahmeeinrichtung nach einem der Ansprüche 1-11, dadurch gekennzeichnet, daß zusätzlich eine Breitband-Beleuchtung an der Bildaufnahmeeinrichtung angebracht ist.

13. Optische Bildaufnahmeeinrichtung nach einem der Ansprüche 1-5, dadurch gekennzeichnet, daß die Breitband-Beleuchtung und das Leuchtfleckenraster denselben Beleuchtungsstrahlengang verwenden.

14. Optische Bildaufnahmeeinrichtung nach Anspruch 13, dadurch gekennzeichnet, daß eine z-Bewegungseinrichtung am Objektiv oder am Objekt angreifend ist.

15. Optische Bildaufnahmeeinrichtung nach einem der Ansprüche 1-14, dadurch gekennzeichnet, daß die Verstellelemente zur Einjustierung der Linsenplatte relativ zum Objekt eine z-Bewegung ausführen können.

16. Optische Bildaufnahmeeinrichtung nach einem der Ansprüche 1-14, dadurch gekennzeichnet, daß das Objekt ein Wafer ist, auf welchem sich elektronische Bausteine befinden.

17. Verfahren zur Ermittlung der scharf abgebildeten Bereiche einer optische Bildaufnahmeeinrichtung eines dreidimensionalen Objekts, bei welcher in der Bildaufnahmeeinrichtung ein Beleuchtungsrastergenerator in einer ersten Fokalebene eine Vielzahl von getrennten Leuchtflecken gleichzeitig erzeugt, die Leuchtflecken in der ersten Fokalebene durch optische Elemente in eine zweite Fokalebene auf dem dreidimensionalen Objekt abgebildet werden und das Bild der Leuchtflecken durch optische Elemente auf ein erste Detektorvorrichtung mit mehreren Detektorelementen abgebildet wird sowie das Bild des Objekts durch eine zweite Detektorvorrichtung aufgenommen wird, dadurch gekennzeichnet, daß eine Korrelation der Bilder der beiden Detektorvorrichtungen erfolgt.

18. Verfahren nach Anspruch 17, dadurch gekennzeichnet, daß das Leuchtfleckenraster die scharfen Bereiche des Bildes bestimmen.

19. Verfahren nach Anspruch 17, dadurch gekennzeichnet, daß in einer ersten Stellung
1) durch die Leuchtflecken eine Auswahl der aufzunehmenden Teilbereiche eines Bildes erfolgen,
2) daß das Leuchtfleckenraster danach ausgeschaltet wird,
3) daß dann eine Teilbildaufnahme erfolgt und nach dem Abschluß der Teilbildaufnahme zumindest eine Bewegung des Objekts aus der ersten Stellung in zumindest eine weitere Stellung erfolgt und nach jedem Stellungswechsel die Schritte 1) bis 3) wiederholt werden.

20. Verfahren nach Anspruch 17, dadurch gekennzeichnet, daß durch Schrägstellung der Leuchtflecken in der ersten Fokalebene eine Detektierung der Objekttiefe erfolgt und nach einer Geradstellung der Leuchtflecken in der ersten Fokalebene dann die eigentliche Bildaufnahme erfolgt.
